# FASCICULE DE BREVET EUROPEEN

(11) **EP 0 781 038 B1**
(45) Date de publication et mention de la délivrance du brevet: **18.07.2001**
(21) Numéro de dépôt: 96410126.5
(22) Date de dépôt: 17.12.1996
(51) Int. Cl.: H04N 5/12

(54) **Dispostitif de traitement de signaux de synchronisation**
Vorrichtung zur Verarbeitung von Synchronisationsignalen
Device for processing of synchronization signals

(30) Priorité: 18.12.1995 FR 9515445
(43) Date de publication de la demande: 25.06.1997
(73) Titulaire: STMicroelectronics S.A., 94250 Gentilly (FR)
(72) Inventeur: Cirot, Eric, 38600 Fontaine (FR); Lebouleux, Nicolas, 38100 Grenoble (FR)
(74) Mandataire: de Beaumont, Michel

(56) Documents cités:
- US-A- 4 616 259
- US-A- 4 709 268
- US-A- 5 142 170
- US-A- 5 189 515

## Description

La présente invention a pour objet un dispositif de traitement de signaux comprenant des impulsions de synchronisation horizontale utilisées pour l'affichage de données sur un écran. Plus particulièrement, elle a pour objet un dispositif de filtrage permettant d'éliminer des signaux d'égalisation dans un signal de type composite. Elle trouve son application dans le domaine des moniteurs.

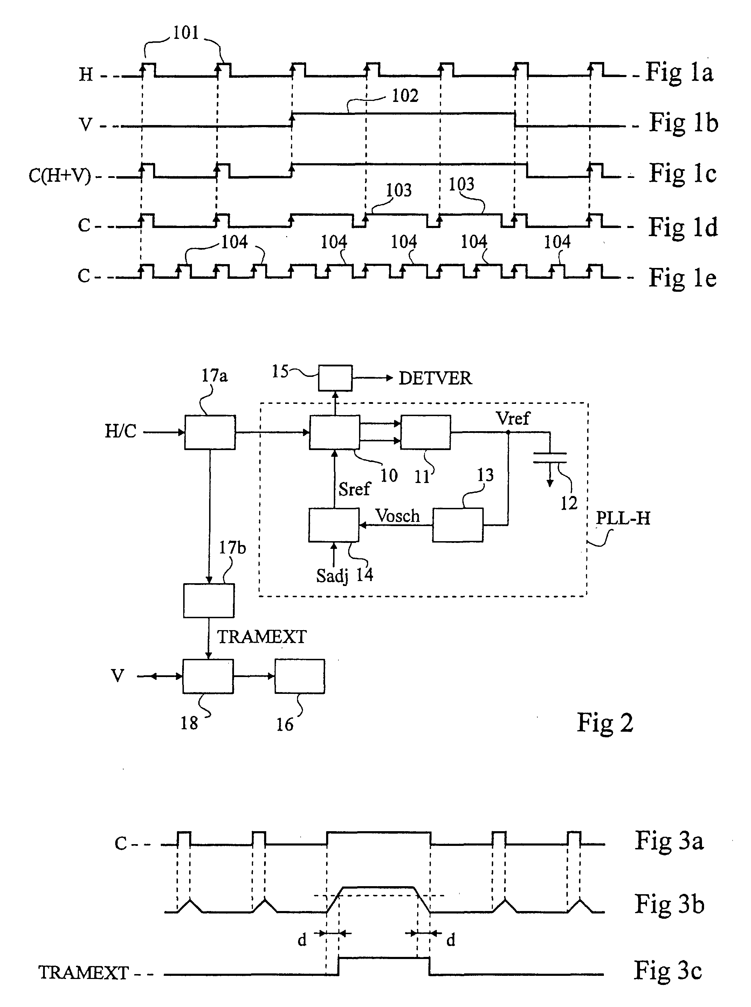

Pour contrôler l'affichage de données sur un moniteur, et plus particulièrement pour contrôler les balayages d'un faisceau d'électrons sur un écran, on utilise des signaux de synchronisation (qui s'ajoutent au signal utile, c'est-à-dire au signal représentatif des données à afficher). Les signaux de synchronisation contiennent des informations temporelles permettant de fixer le début d'une ligne (signaux de synchronisation horizontale) et le début d'une trame (signaux de synchronisation verticale, dits de trame). Ces signaux sont exploités à partir de boucles à verrouillage de phase. On rappelle qu'une trame est l'ensemble des lignes nécessaires pour former une image sur l'écran d'un moniteur. Les signaux de synchronisation sont des signaux logiques impulsionnels définis principalement par la polarité de leurs impulsions (positive ou négative suivant que l'on prenne en compte les fronts montants ou descendants de ces impulsions), la fréquence de récurrence des impulsions, et leur durée. Les figures 1a et 1b illustrent ainsi des signaux H et V de synchronisation respectivement horizontale et verticale, de polarités positives, et formés d'impulsions référencées respectivement 101 et 102. En pratique, on retiendra que la fréquence de récurrence des signaux de synchronisation horizontale est la plus élevée, que la durée des impulsions de synchronisation de trame est la plus grande, et que les fronts actifs (c'est à dire montants pour une polarité positive) des impulsions de synchronisation de trame sont en phase avec des fronts actifs des signaux de synchronisation horizontale.

Les signaux de synchronisation horizontale et de trame sont transmis soit séparément, soit sous la forme d'un signal unique, dit composite, comprenant à la fois les informations de synchronisation horizontale et de trame, tel qu'illustré par exemple sur la figure 1c (signal H+V, correspondant au résultat de l'opération logique OU entre les signaux illustrés sur les figures la et 1b). Un inconvénient de ce type de signal composite est l'absence de fronts durant toute la durée du signal de synchronisation de trame. Pour pallier à ce type d'inconvénient, il est connu d'insérer des signaux dits de serration dans le signal composite (figure 1d, impulsions de serration référencées 103), de manière à produire des fronts actifs dans la partie du signal composite correspondant à une trame, ces fronts ayant les mêmes phase et fréquence que les fronts actifs des impulsions de synchronisation horizontale dans le signal composite.

Enfin, pour des raisons essentiellement historiques, liées à la télévision, il est connu également d'intercaler des signaux dits d'égalisation dans le signal composite (figure le, signaux portant la référence 104). Ces signaux sont intercalés entre les impulsions de synchronisation horizontale avant et après les impulsions de synchronisation de trame, et entre les signaux de serration pendant les impulsions de trame. Ils induisent ainsi un doublement de la fréquence des fronts actifs quand ils sont présents. Typiquement, les impulsions d'égalisation apparaissent quand il reste à recevoir cinq impulsions de synchronisation horizontale avant de recevoir l'impulsion de trame et disparaissent une fois qu'on a reçu les cinq premières impulsions de synchronisation horizontale situées après la fin des impulsions de trame.

La présence de signaux d'égalisation dans un signal composite est susceptible de perturber le fonctionnement de la boucle à verrouillage de phase utilisée pour commander le balayage de ligne à partir d'un signal composite. Il existe en effet un risque de verrouiller la boucle sur une fréquence double de la fréquence de récurrence des impulsions de synchronisation horizontale.

Le document US-A-5189515 décrit l'utilisation d'une telle boucle à verrouillage de phase avec élimination des impulsions d'égalisation dans un système de traitement d'un signal comprenant des impulsions de synchronisation horizontale.

La figure 2 illustre schématiquement un dispositif à verrouillage de phase utilisé dans le domaine des moniteurs. On s'intéressera plus particulièrement à l'exploitation des signaux de synchronisation horizontale. Cette exploitation est réalisée principalement par le biais d'une boucle à verrouillage de phase PLL-H. Cette boucle comprend un comparateur 10, une pompe de charge 11, un filtre capacitif 12, un oscillateur contrôlé en tension 13, et un dispositif d'ajustement de phase 14. Le comparateur 10 sert à comparer un signal d'entrée (signal de synchronisation horizontale H ou composite C reçu) avec un signal impulsionnel Sref de référence. En fonction de la comparaison, le comparateur 10 commande la pompe de charge 11. Cette pompe 11 va charger le filtre 12, de sorte que la tension Vref aux bornes du filtre sera représentative du résultat de la comparaison. L'oscillateur 13 produit un signal triangulaire dont la fréquence est proportionnelle à la tension Vref, ce signal étant ensuite transformé en signal impulsionnel Sref par le dispositif 14, la position des fronts du signal Sref étant réglée par le biais d'un signal Sadj d'ajustement de phase. Le comparateur 10 est de préférence un comparateur de type phase/fréquence, pour éviter de caler la boucle PLL-H sur une fréquence multiple de la fréquence de récurrence des impulsions de synchronisation horizontale. Une fois que les signaux de synchronisation reçus et de référence sont en phase et de même fréquence, la tension Vref se stabilise. Un dispositif de détection 15 va générer un signal DETVER dont l'état indiquera que la boucle est verrouillée sur la fréquence et la phase du signal d'entrée. Typiquement, une interface d'entrée 17a et une interface d'entrée/sortie 18 permettent de fournir les signaux de synchronisation reçus à la boucle de verrouillage PLL-H et à un dispositif 16 de traitement des signaux de synchronisation verticale. L'interface d'entrée 17a est par exemple une interface de détection de polarité et de remise en forme, de manière à délivrer en interne des signaux de polarité positive. L'interface 17a est reliée à l'interface 18 par le biais d'un circuit 17b. Ce circuit 17b produit un signal de synchronisation de trame TRAMEXT (illustré sur la figure 3c) extrait à partir du signal reçu par l'interface 17a, si ce dernier signal est de type composite. Le circuit 17b est par exemple un intégrateur à capacité intégrée. Si les signaux de synchronisation horizontale et verticale sont distincts, l'interface 17a fournit les signaux de synchronisation horizontale à la boucle PLL-H, et l'interface 18 fournit les signaux de synchronisation verticale au dispositif 16. Si le signal reçu est de type composite, l'interface d'entrée fournit le signal composite (redressé ou non) à la boucle PLL-H et au circuit 17b. Celui-ci produit le signal TRAMEXT, celui-ci étant retardé avec un certain retard d (une technique classique de production d'un signal de synchronisation de trame extrait étant schématiquement de commander la charge et la décharge de la capacité intégrée à partir des impulsions reçues et de comparer la tension aux bornes de la capacité à une tension de référence, la tension de référence étant choisie de sorte à ne pas être atteinte quand la durée de la charge correspond à la durée d'une impulsion de synchronisation horizontale, voir figure 3b). Le circuit 17b comprend typiquement un détecteur de front (réalisé par exemple à l'aide d'une bascule) pour commander un commutateur (compris dans l'interface 18) de sorte que l'interface fournisse le signal TRAMEXT au dispositif 16 et à l'extérieur. Le signal TRAMEXT peut être utilisé pour inhiber la boucle PLL-H afin d'éviter une dérive de cette boucle lors de la réception des impulsions de synchronisation de trame, si la synchronisation est de type composite.

L'utilisation d'un comparateur de type phase/fréquence permet également d'éviter de verrouiller la boucle PLL-H sur une fréquence multiple lorsque seules des impulsions de synchronisation horizontale sont présentes, ce que ne permet pas un comparateur de phase simple. Un problème est que ce type de comparateur est intolérant à l'absence d'impulsions (par exemple lors d'une impulsion de trame sans impulsions de serration) et à la présence d'impulsions parasites supplémentaires (un exemple typique étant celui de la présence d'impulsions d'égalisation).

Un but de l'invention est de proposer un dispositif permettant d'éviter ce type d'inconvénient. Pour ce faire, on propose de mettre en oeuvre un fenêtrage sur les fronts actifs des impulsions de synchronisation horizontale reçues. Ainsi, on élimine toute dérive pouvant être occasionné par la présence d'impulsions d'égalisation.

Ainsi, l'invention concerne un dispositif de traitement d'un signal comprenant des impulsions de synchronisation horizontale utilisées pour l'affichage de données sur un écran, ce dispositif comprenant une boucle à verrouillage de phase pour commander le balayage horizontal de l'écran à partir de fronts actifs des impulsions de synchronisation, caractérisé en ce qu'il comprend des moyens de production d'un signal de fenêtrage pour filtrer, quand il est dans un état actif, le signal reçu par la boucle à verrouillage de phase de manière à éliminer de ce signal les fronts actifs déphasés par rapport aux fronts actifs des impulsions de synchronisation horizontale.

Avantageusement, ce fenêtrage est combiné avec un fenêtrage créé à partir du dispositif de traitement de synchronisation verticale, de manière à effectuer le fenêtrage autour et pendant les impulsions de synchronisation de trame. Cela évite de se caler sur une fréquence multiple de la fréquence de récurrence des impulsions de synchronisation horizontale, ce qui pourrait arriver en cas de fenêtrage permanent, dans l'hypothèse d'un changement de fréquence de récurrence instantané à une fréquence multiple. Un fenêtrage permanent induit par ailleurs un risque de décrochage du comparateur de la boucle en cas de dérive de la phase des impulsions de synchronisation reçues. Un fenêtrage limité au domaine temporel dans lequel on peut trouver des signaux d'égalisation permet de s'adapter plus rapidement à une telle dérive de phase.

Dans une version préférée, le signal de fenêtrage est obtenu par combinaison d'un signal représentatif des impulsions de synchronisation horizontale et d'un signal représentatif d'impulsions de synchronisation de trame, de manière à ce que le signal de fenêtrage soit activé temporellement avant le début des impulsions de synchronisation de trame, et à ce qu'il soit inactivé après la fin des impulsions de synchronisation de trame.

D'autres particularités et avantages apparaîtront à la lecture de la description suivante, à lire conjointement aux dessins annexés, dans lesquels :
- les figures la à le représentent des chronogrammes de signaux de synchronisation connus,
- la figure 2 représente schématiquement une boucle à verrouillage de phase connue,
- les figures 3a à 3c représentent des chronogrammes d'un signal de type composite et d'un signal de synchronisation de trame extrait à partir du signal composite,
- la figure 4 représente schématiquement un dispositif réalisé conformément à l'invention,
- la figure 5 représente un circuit mis en oeuvre dans le dispositif de la figure 4,
- les figures 6a à 6d représentent des chronogrammes de signaux relatifs à la réalisation d'un signal de fenêtrage par le circuit illustré sur la figure 5,
- la figure 7 représente un circuit mis en oeuvre dans le dispositif de la figure 4,
- les figures 8a à 8f représentent des chronogrammes de signaux relatifs à la réalisation d'un signal de fenêtrage par le circuit illustré sur la figure 7,
- la figure 9 représente un circuit mis en oeuvre dans le dispositif de la figure 4,
- les figures 10 à 12 représentent des circuits permettant de mettre en oeuvre une inhibition de la boucle à verrouillage de phase d'un dispositif selon l'invention,
- la figure 13 représente une variante de réalisation du circuit illustré par la figure 9,
- la figure 14 représente un circuit permettant de produire un signal mis en oeuvre par le circuit de la figure 13.

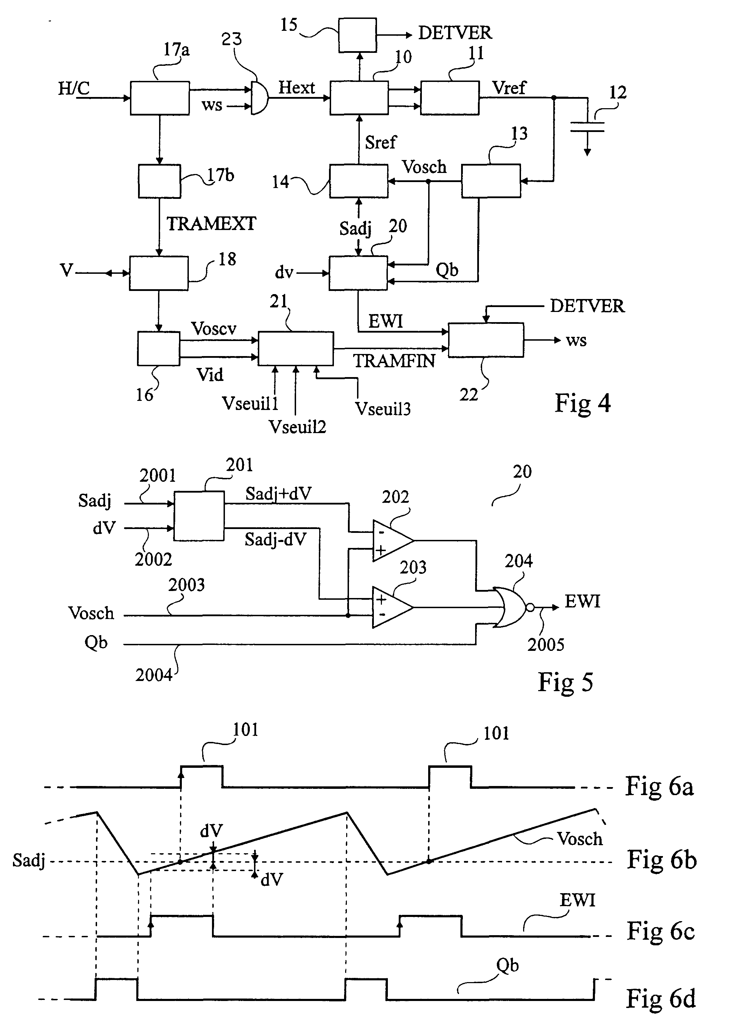

La figure 4 illustre schématiquement un dispositif réalisé conformément à l'invention. Outre les éléments mentionnés en référence à la figure 2, il comprend un circuit 20 permettant de produire un signal EWI de fenêtrage à partir du signal produit par l'oscillateur 13 et du signal Sadj d'ajustement de phase, un circuit 21 permettant de produire un signal TRAMFIN de fenêtrage à partir du dispositif de traitement de synchronisation verticale, un circuit 22 permettant de produire un signal WS de fenêtrage à partir des signaux EWI, TRAMFIN et DETVER, et un circuit 23 permettant le filtrage du signal reçu par la boucle PLL-H à partir du signal WS pour éliminer les impulsions d'égalisation.

On supposera dans la suite de la description que le signal reçu est de type composite et de polarité positive. Si le signal original est de polarité négative, il suffit d'inverser ce signal pour produire un signal de polarité positive.

Par ailleurs, on considérera que les signaux logiques sont dits actifs quant ils sont à l'état haut, et qu'ils sont dits inactifs quand ils sont à l'état bas. Par analogie, les fronts montants seront dits actifs, et les fronts descendants seront dits inactifs.

Le circuit 20 est illustré sur la figure 5. Il comprend quatre entrées 2001, 2002, 2003, et 2004, et une sortie 2005. Les entrées 2001 et 2002 reçoivent deux potentiels utilisés pour définir le signal EWI (illustré sur la figure 6c), Sadj et dV. A partir de ces potentiels, on produit deux potentiels Sadj+dV et Sadj-dV à partir d'une source de tension 201 commandée en tension. L'entrée 2003 reçoit un signal Vosch en dent de scie (illustré sur la figure 6b) produit par l'oscillateur 13. L'entrée 2004 reçoit un signal Qb (illustré sur la figure 6d) qui est actif pendant la descente du signal Vosch produit par l'oscillateur 13. Le signal Qb sera produit par un détecteur de décharge de capacité, le signal en dent de scie produit par l'oscillateur étant typiquement produit à partir de la charge et de la décharge d'une capacité. Deux comparateurs 202 et 203 permettent de comparer le signal Vosch respectivement à Sadj-dV (entrée + du comparateur 203) et Sadj+dV (entrée - du comparateur 202). Le circuit 20 comprend enfin une porte logique NON_OU 204 recevant en entrée les signaux produits par les comparateurs 202 et 203, et le signal Qb. Le potentiel Sadj utilisé dans le circuit 20 est le signal utilisé pour repérer les fronts actifs des impulsions de synchronisation horizontale dans le dispositif 14. Ainsi, on produit un signal impulsionnel EWI dont la fréquence est identique à celle des impulsions de synchronisation horizontale, de polarité positive, et dont l'impulsion est centrée sur le front actif des impulsions de synchronisation horizontale. On va maintenant décrire le fonctionnement du circuit 20 en référence aux figures 6a à 6d. Le dessin 6a illustre un signal de synchronisation horizontale.

Le signal en dent de scie comprend une succession de rampes positives (tension croissant entre un minimum Vmin et un maximum Vmax) et de rampes négatives (tension décroissant entre Vmax et Vmin) telles que les rampes positives correspondent temporellement avec des périodes d'apparition des fronts actifs des impulsions de synchronisation horizontale. Ainsi, les fronts correspondent temporellement à une tension Sadj comprise entre Vmin et Vmax, dans les rampes positives.

Tant que la tension de la rampe est inférieure à Sadj-dV, le comparateur 203 produit un signal actif. Le signal EWI est donc inactif. Au moment ou la tension de rampe positive atteint Sadj-dV, la sortie du comparateur 203 bascule à l'état inactif. Le signal EWI devient donc actif (le signal produit par le comparateur 202 et Qb sont alors inactifs). Ultérieurement, le signal Vosch atteint Sadj+dV. Le signal produit par le comparateur 202 devient alors actif. Le signal EWI repasse donc à l'état inactif. Une fois la tension Vmax atteinte, le signal Vosch commence à décroître entre Vmax et Vmin. Pendant cette période, le signal Qb est actif, ce qui assure que le signal EWI reste inactif quand le signal Vosch décroît entre Sadj+dV et Sadj-dV. Ainsi, on produit un signal EWI actif autour des fronts actifs des impulsions de synchronisation horizontale.

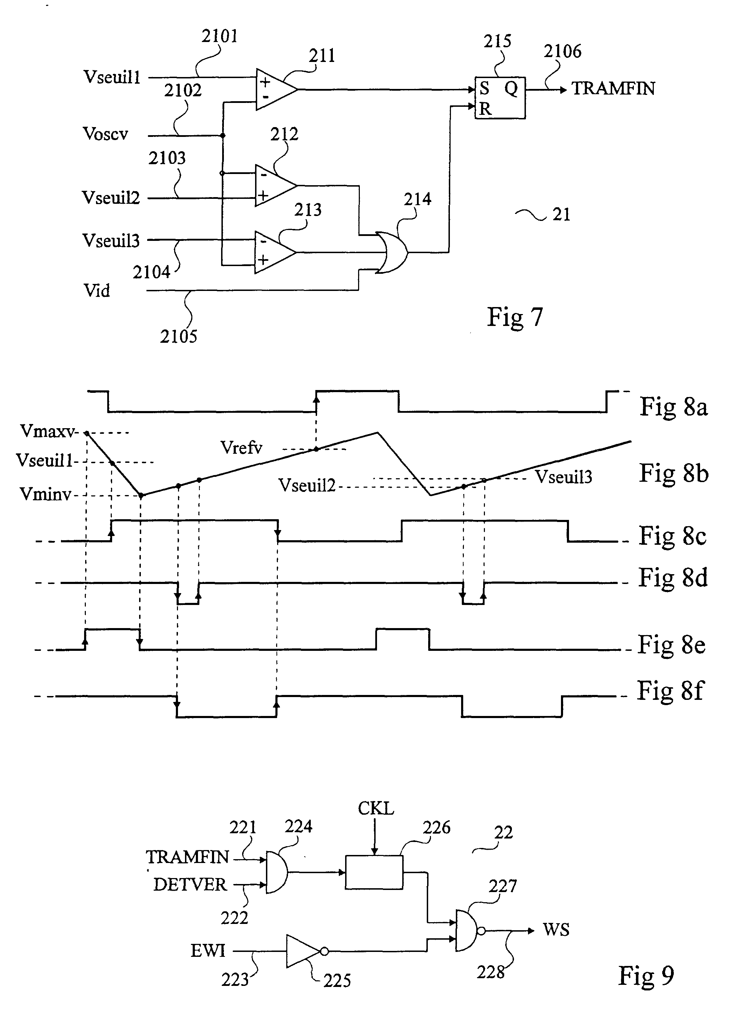

La figure 7 illustre le circuit 21. Le circuit 21 comprend cinq entrées et une sortie. Une entrée 2101 permet de recevoir un potentiel Vseuill. Une entrée 2102 permet de recevoir un signal Voscv en dent de scie. Une entrée 2103 permet de recevoir un potentiel Vseuil2. Une entrée 2104 permet de recevoir un signal Vseuil3. Une entrée 2105 permet de recevoir un signal Vid. Une sortie 2106 permet de fournir le signal logique TRAMFIN.

Le circuit 21 comprend un comparateur 211 (recevant Vseuill sur son entrée "+" et Voscv sur son entrée "-"), un comparateur 212 (recevant Voscv sur son entrée "-" et Vseuil2 sur son entrée "+") et un comparateur 213 (recevant Voscv sur son entrée "+" et Vseuil3 sur son entrée "-"), une porte logique OU 214 et une bascule RS 215 de type NON_ET. La porte 214 reçoit en entrée les signaux produits par les comparateurs 212 et 213, et le signal Vid. Le signal produit par cette porte est fourni à l'entrée de réinitialisation R de la bascule 215. Cette bascule reçoit le signal produit par le comparateur 211 sur son entrée d'initialisation S, et sa sortie Q est reliée à la sortie 2106. Les figures 8a à 8f illustrent des signaux produits ou reçus par le circuit 21.

On suppose que le signal Voscv (illustré sur la figure 8b) est produit par le circuit de traitement des impulsions de synchronisation de trame (illustrées sur la figure 8a), que ce signal comprend une succession de rampes positives (tension croissant entre un minimum Vminv et un maximum Vmaxv) et de rampes négatives (tension décroissant entre Vmaxv et Vminv), que les fronts actifs de ces impulsions correspondent temporellement à une tension Vrefv dans les rampes positives, et que les rampes négatives ont une durée fixe (par exemple de l'ordre de 250 microsecondes). On supposera par ailleurs que le signal Vid (illustré sur la figure 8e) est actif pendant les périodes de décroissance du signal Voscv, et inactif sinon. On utilisera par exemple le dispositif de traitement vertical mis en oeuvre dans le circuit TDA9103 produit par la société SGS-THOMSON Microelectronics.

On choisira les valeurs des potentiels Vseuill, Vseuil2 et Vseuil3 de telle sorte qu'ils soient compris entre Vminv et Vref, que Vseuil2 ait la valeur la plus faible et que Vseuill ait la valeur la plus élevée.

Supposons que le signal Voscv soit croissant et de valeur supérieure à la valeur de Vseuil3. Le signal produit par le comparateur 213 est actif, et par conséquent le signal (illustré sur la figure 8d) produit par la porte 214 l'est aussi. Quand le signal Voscv atteint la valeur de Vseuill, le signal (illustré sur la figure 8c) produit par le comparateur 211 devient inactif. Le signal TRAMFIN (illustré sur la figure 8f) passe alors à l'état actif. Lors de la décroissance du signal Voscv, le signal Vid étant actif, le signal produit par la porte 214 reste actif. Par contre, le signal produit par le comparateur 211 passe à l'état inactif quand Voscv atteint la valeur de Vseuill. Une fois que le signal Voscv a atteint Vminv, il commence à croître à nouveau. Une fois la valeur de Vseuil2 atteinte, le signal produit par la porte 214 passe à l'état inactif, ce qui entraîne le passage à l'état inactif du signal TRAMFIN, jusqu'à ce que la valeur de Vseuill 1 soit à nouveau atteinte. Quand la valeur de Vseuil3 est ultérieurement atteinte, le signal produit par le comparateur 213 passe à l'état actif, ce qui entraîne le passage à l'état actif du signal produit par la porte 214. La bascule 215 est prête à être de nouveau initialisée.

On produit donc un signal TRAMFIN qui est à l'état actif durant une période débutant avant l'apparition d'un front actif de synchronisation de trame, et se terminant après la fin de l'impulsion de synchronisation de trame. De préférence, on choisira les valeurs de Vseuill (comparativement à Vrefv) et de Vseuil2 (comparativement à Vminv) de telle sorte que le signal TRAMFIN soit actif dans les domaines temporels dans lesquels on peut trouver des signaux d'égalisation. La fréquence de récurrence des impulsions de synchronisation horizontale étant classiquement comprise entre 15 et 150 kilohertz, on pourra choisir les valeurs des seuils de telle sorte que l'on soit certain de couvrir tout ce spectre fréquentiel. Concrètement, cela revient à choisir Vseuill tel que Vrefv-Vseuill corresponde temporellement à une durée de 333 microsecondes (c'est à dire la durée de cinq périodes pour la fréquence de récurrence des impulsions de synchronisation horizontale la plus basse) et à choisir Vseuil2 tel que la correspondance temporelle de (Vseuil2-Vminv), augmentée de 250 microsecondes, soit supérieure à la durée maximale d'une impulsion de synchronisation horizontale (par exemple 700 microsecondes) augmentée de 333 microsecondes, et cela pour la fréquence de récurrence maximale des impulsions de synchronisation verticale.

La figure 9 illustre le circuit 22. Celui-ci reçoit sur des entrées 221, 222 et 223 respectivement les signaux DETVER, EWI et TRAMFIN, et produit sur une sortie 228 un signal WS. Le circuit 22 comprend une porte logique ET 224 recevant les signaux TRAMFIN et DETVER en entrée et ayant sa sortie reliée à l'entrée d'une bascule 226 de type D cadencée par un signal d'horloge CKL. Il comprend un inverseur 225 permettant de produire le signal /EWI (signal complémentaire du signal EWI) à partir du signal EWI. Il comprend enfin une porte logique NON_ET 227 ayant ses entrées reliées aux sorties de la bascule 226 et de l'inverseur 225.

Si la boucle PLL-H est non verrouillée, le signal DETVER est à l'état inactif. Les signaux produits par la porte 224 et par la bascule 226 sont donc inactifs. Le signal produit par la porte 227 est donc actif. Le signal en sortie de la porte 23 est donc identique au signal de synchronisation fourni par l'interface 17. Autrement dit, on ne pratique pas de fenêtrage de ce signal. Cela se justifie par le fait que la boucle est alors dans un mode de recherche des phase et fréquence des impulsions de synchronisation horizontale reçues.

Si la boucle PLL-H est verrouillée et qu'on est loin du signal de trame, le signal DETVER est actif et le signal TRAMFIN est inactif. En conséquence, les signaux produits par la porte 224 et par la bascule 226 sont inactifs. Le signal produit par la porte 227 est donc actif. De même que dans le cas illustré précédemment, on ne pratique pas de fenêtrage du signal de synchronisation fourni par l'interface 17. Comme on est loin du signal de trame, seules les impulsions de synchronisation horizontale sont présentes.

Enfin, si la boucle PLL-H est verrouillée et qu'on est situé temporellement autour du signal de trame, le signal DETVER est actif et le signal TRAMFIN devient actif. En conséquence le signal en sortie de la porte 224 devient actif, puis le signal en sortie de bascule devient actif. En conséquence, le signal WS est identique au signal EWI reçu par le circuit 22. Ainsi, seuls les fronts des impulsions de synchronisation horizontale et des impulsions de serration seront pris en compte par la boucle PLL-H. Le signal d'horloge CKL est de préférence valide sur front actif du signal EWI, pour éviter tout démarrage hasardeux.

Comme on l'a dit, il est connu d'inhiber la boucle à verrouillage de phase lors des impulsions de synchronisation de trame afin d'éviter une dérive de la tension Vref. Si les impulsions de serration sont absentes du signal reçu (par exemple, si le signal reçu est un signal composite de type H+V), il est préférable de modifier le circuit en ce sens afin d'éviter de créer des fronts parasites en entrée de la boucle correspondants aux fronts du signal EWI. En effet, si l'état du signal reçu est actif simultanément au fenêtrage, le signal en sortie de la porte 23 correspondra au signal EWI. On introduira alors un déphasage dans la boucle, les fronts actifs du signal EWI étant en avance de phase par rapport aux fronts actifs des impulsions de synchronisation horizontale.

Par ailleurs, en présence des impulsions de serration, il existe également un risque de production d'impulsions parasites, si la fenêtre EWI est trop large et que le signal EWI devient actif avant que le signal reçu ne soit repassé à l'état inactif.

Ainsi, une inhibition de la boucle peut être préférable en tout état de cause lors de l'apparition d'impulsions de synchronisation de trame.

Pour ce faire, il suffit de déconnecter la pompe de charge du filtre en intercalant par exemple un interrupteur CMOS entre ces éléments de la boucle, cet interrupteur étant commandé en fonction du signal de synchronisation de trame extrait si on utilise un signal de synchronisation composite. Si les synchronisations sont différenciées, il n'est pas nécessaire d'inhiber la boucle PLL-H, et le signal TRAMEXT est alors inactif.

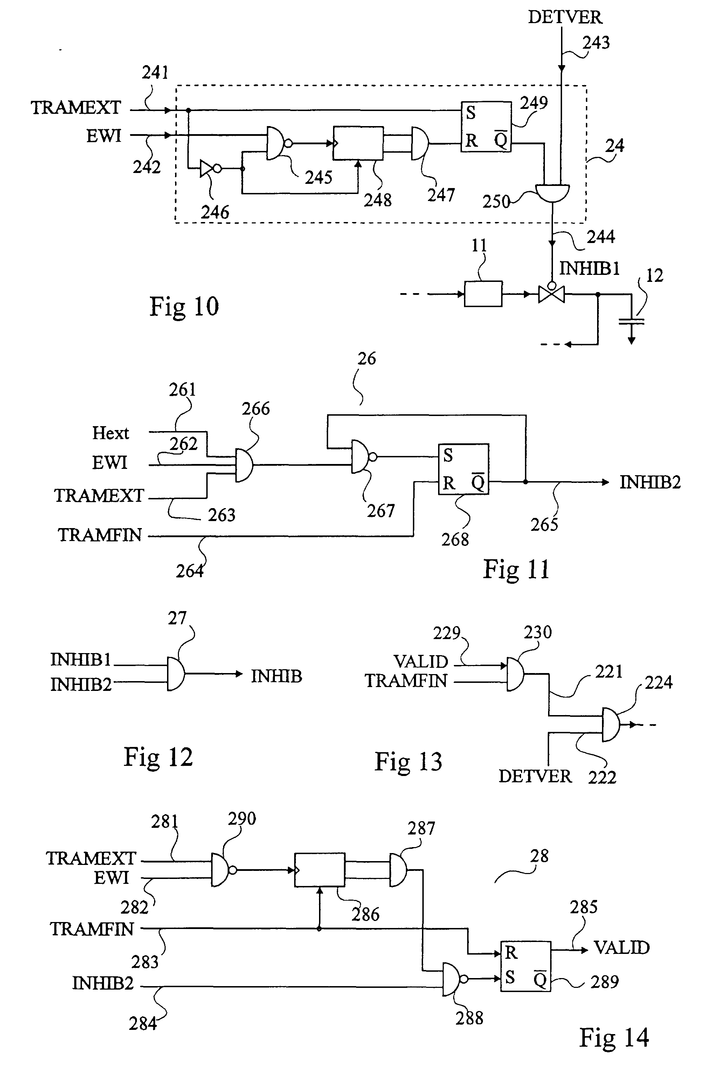

La figure 10 illustre un exemple de circuit 24 de commande permettant de commander l'inhibition de la boucle.

Ce circuit comprend trois entrées 241, 242 et 243 pour recevoir respectivement les signaux TRAMEXT, EWI et DETVER, et une sortie 244 pour fournir un signal de commande INHIB1. Le circuit 24 comprend également une porte logique NON_ET 245, un inverseur 246, une porte logique ET 247, un compteur 248, une bascule RS 249 de type NON_OU, et une porte logique ET 250.

La porte 245 reçoit en entrée le signal EWI et le signal complémentaire de TRAMEXT, produit par l'inverseur 246. Le signal produit par la porte 245 est utilisé pour cadencer le compteur 248 (dans l'exemple on considère que l'incrémentation du compteur est réalisée sur front descendant du signal produit par la porte 245). Le signal produit par l'inverseur 246 est également utilisé pour la mise en marche du compteur 248. La porte 247 est utilisée comme un comparateur. Elle est reliée au compteur de sorte à produire un signal actif quand la valeur du compteur a atteint une valeur de comptage désirée. La bascule 249 reçoit sur son entrée d'initialisation S le signal TRAMEXT, et son entrée de réinitialisation R reçoit le signal produit par la porte 247. La porte 250 reçoit le signal DETVER et le signal présent sur la sortie inverseuse /Q de la bascule.

Si la boucle n'est pas verrouillée, le signal DETVER est inactif. Par conséquent, le signal INHIB1 est inactif. La pompe est alors reliée au filtre, et la boucle est alors en mode de recherche de la phase et de la fréquence du signal reçu depuis l'interface 17.

Si la boucle est verrouillée, le signal DETVER est actif. Par conséquent, l'état du signal INHIB1 est déterminé par l'état de la sortie de la bascule 249. Un front actif du signal TRAMEXT provoque la mise à l'état actif de la sortie de la bascule 249. Le signal INHIB1 passe alors à l'état actif, ce qui provoque l'isolement du filtre de la pompe de charge. Quand le signal TRAMEXT repasse à l'état inactif, le compteur 248 est démarré. Il commence a compter, cadencé par les fronts descendants du signal EWI. Une fois que le compteur a atteint la valeur recherchée, la sortie de la porte 247 passe à l'état actif. Le signal de sortie de la bascule 249 passe donc à l'état inactif et le signal d'inhibition INHIB1 repasse à l'état inactif. L'utilisation du compteur 248 tel que décrite permet de créer un délai entre la fin de l'impulsion de synchronisation de trame et l'arrêt de l'inhibition de la boucle. On disposera ainsi d'un délai pour réinitialiser le comparateur de la boucle.

On pourra par exemple choisir de ne pas prendre en compte les deux impulsions de synchronisation horizontale suivant la fin d'une impulsion de synchronisation de trame.

On notera que :
- si les synchronisations horizontale et verticale sont distinctes, le signal reçu par la boucle de phase est uniquement constitué d'impulsions de synchronisation horizontale. Il n'est donc pas nécessaire d'inhiber la boucle à verrouillage de phase par le biais du circuit 24 décrit précédemment.
- si on traite une synchronisation composite et qu'il n'existe pas d'impulsions de serration, il n'y a pas non plus d'impulsions d'égalisation. Il n'est donc pas nécessaire de pratiquer un fenêtrage en entrée par le biais du signal WS. Cela peut même être dommageable si on met parallèlement en oeuvre l'inhibition de la boucle tel que décrit. Effectivement, si on note la présence de fuites au niveau du filtre, la tension Vref va diminuer, ce qui va entraîner une dérive de l'oscillateur de la boucle. Une telle dérive induit un décalage temporel du signal EWI. Il pourra alors arriver que les fronts actifs des impulsions de synchronisation horizontale apparaissent alors que le signal EWI est passé à l'état inactif. Autrement dit le signal reçu par le comparateur sera alors en permanence inactif.
- si il y a des impulsions de serration, et si on considère une faible largeur des impulsions du signal EWI, il est intéressant de ne pas inhiber la boucle, ces impulsions étant de mêmes fréquence et phase que les impulsions de synchronisation horizontale. Il faut par contre mettre en oeuvre un fenêtrage pour éliminer les éventuels signaux d'égalisation.

On propose de prendre en compte les remarques ci-dessus, en produisant un signal d'inhibition INHIB produit d'une part à partir du signal INHIB1 tel que décrit ci-dessus, et d'autre part à partir d'un autre signal, noté INHIB2, représentatif de la présence ou de l'absence d'impulsions de serration, de manière à ne pas inhiber la boucle si des impulsions de serration sont présentes, et à l'inhiber si de telles impulsions sont absentes.

La production du signal INHIB2 est réalisée par exemple avec le circuit 26 illustré sur la figure 11.

Le circuit 26 comprend quatre entrées 261, 262, 263, 264 et une sortie 265. L'entrée 261 reçoit un signal /Hext (complémentaire du signal Hext présent en sortie de la porte 23 et reçu par la boucle). L'entrée 262 reçoit le signal EWI. L'entrée 263 reçoit le signal TRAMEXT. L'entrée 264 reçoit le signal TRAMFIN. La sortie 265 fournit le signal INHIB2.

Le circuit 26 comprend une porte logique ET 266 à trois entrées, ces entrées étant reliées respectivement aux entrées 261, 262, et 263. Il comprend également une porte logique NON_ET 267 à deux entrées dont les entrées sont reliées respectivement à la sortie de la porte 266 et à la sortie 265. Il comprend une bascule RS 268 de type NON_ET dont l'entrée d'initialisation S est reliée à la sortie de la porte 267, et dont l'entrée de réinitialisation R est reliée à la sortie 265. La sortie inverseuse /Q de cette bascule est reliée également à la sortie 265.

Le signal INHIB est produit par une porte logique ET 27 recevant les signaux INHIB1 et INHIB2 en entrée (voir figure 12).

Initialement, INHIB2 est à l'état actif. Si il n'y a pas d'impulsions de serration, le signal /Hext reste inactif lors de la réception d'une impulsion de synchronisation de trame, donc la sortie de la porte 261 est à l'état haut. De ce fait INHIB2 reste inchangé et le signal INHIB est donc identique au signal INHIB1. Autrement dit, on met en oeuvre une inhibition de la boucle. Si il y a des impulsions de serration, le signal /Hext devient actif pendant que EWI est actif. Une impulsion est produite en sortie de la porte 266. En conséquence, le signal INHIB2 passe à l'état inactif et le signal INHIB est alors inactif. Autrement dit, on ne met pas en oeuvre d'inhibition de la boucle. La porte 267 permet de remettre le signal appliqué à l'entrée S de la bascule 268 à l'état actif pour la suite des événements, ce qui permet d'éviter tout problème avec la bascule au moment où arrive le front descendant du signal TRAMFIN.

Compte tenu de ce qui a été développé ci-dessus, on modifiera avantageusement le circuit 22 en y ajoutant une commande de validation.

En référence à la figure 13, on rajoute au circuit 22 une entrée 229 pour recevoir un signal VALID. Il comprend en outre une porte logique ET 230 recevant les signaux TRAMFIN et VALID et dont la sortie correspond à l'entrée 221 décrite en référence à la figure 9. La porte 230 permet de produire un signal de sortie analogue au signal TRAMFIN si le signal VALID est actif, ou un signal inactif si VALID est inactif.

Pour générer le signal VALID, on utilisera par exemple le circuit 28 représenté sur la figure 14.

Le circuit 28 comprend quatre entrées 281, 282, 283, 284 recevant respectivement les signaux TRAMEXT, EWI, INHIB2, et TRAMFIN. Le circuit 28 comprend une sortie 285 fournissant le signal VALID.

Ce circuit comprend par ailleurs une porte logique NON_ET 290, un compteur 286, une porte logique ET 287, une porte logique NON_ET 288, et une bascule RS 289 de type NON_ET. La porte 290 reçoit les signaux TRAMEXT et EWI en entrée et le signal qu'elle produit en sortie est utilisé comme signal d'horloge du compteur. Le compteur reçoit le signal TRAMFIN sur son entrée de mise en marche. La porte 287 sert de comparateur et délivre un signal actif quand le compteur a compté jusqu'à une valeur choisie. La porte 288 reçoit sur ses entrées le signal produit par la porte 287 et le signal INHIB2. Sa sortie est reliée à l'entrée d'initialisation S de la bascule 289. Cette bascule reçoit le signal TRAMFIN sur son entrée de réinitialisation R, et fournit le signal VALID sur sa sortie inverseuse /Q.

Si des impulsions de serration sont présentes, le signal INHIB2 va passer à l'état inactif pendant que le signal TRAMEXT est actif. La sortie de la porte 288 va donc rester à l'état actif et par conséquent le signal VALID va rester dans l'état actif. Autrement dit, le fenêtrage tel que décrit précédemment est mis en oeuvre.

Si il n'y a pas d'impulsions de serration, le signal INHIB2 reste à l'état actif pendant que le signal TRAMEXT est actif. Quand le compteur a atteint la valeur souhaitée, le signal produit par la porte 287 passe à l'état actif. En conséquence, le signal produit par la porte 288 passe à l'état inactif, ce qui entraîne un passage à l'état inactif du signal VALID. On invalide alors le fenêtrage qui n'est plus mis en oeuvre.

L'invention sera typiquement mise en oeuvre dans un moniteur comprenant classiquement un écran, des dispositifs de déflexion verticale et horizontale, la déflexion étant contrôlée par le biais des signaux Voscv et Vosch (après amplification et prise en compte d'un signal dit de flyback en ce qui concerne la déflexion horizontale).

## Revendications

1. Dispositif de traitement d'un signal comprenant des impulsions (101) de synchronisation horizontale utilisées pour l'affichage de données sur un écran, ce dispositif comprenant une boucle à verrouillage de phase (PLL-H) pour commander le balayage horizontal de l'écran à partir de fronts actifs des impulsions de synchronisation, ce dispositif comprenant des moyens (22) de production d'un signal (WS) de fenêtrage pour filtrer, quand il est à l'état actif, le signal reçu par la boucle à verrouillage de phase de manière à éliminer de ce signal les fronts actifs déphasés par rapport aux fronts actifs des impulsions de synchronisation horizontale, le signal (WS) de fenêtrage étant obtenu par combinaison d'un signal (EWI) représentatif des impulsions de synchronisation horizontale et d'un signal (TRAMFIN) représentatif d'impulsions de synchronisation de trame, de manière que le signal de fenêtrage soit activé temporellement avant le début des impulsions de synchronisation de trame, et qu'il soit inactivé après la fin des impulsions de synchronisation de trame.

2. Dispositif selon la revendication 1, caractérisé en ce qu'il comprend des moyens (28) de contrôle pour activer le signal de fenêtrage si le signal reçu par le dispositif est un signal de type composite comprenant des impulsions (103) de serration, et pour le désactiver sinon.

3. Dispositif selon la revendication 1 ou 2, caractérisé en ce qu'il comporte des moyens (24) d'inhibition de la boucle à verrouillage de phase lors des impulsions de synchronisation de trame, si le signal reçu est de type composite : la boucle à verrouillage de phase comportant un comparateur (10), une pompe de charge (11), un filtre capacitif (12), un oscillateur contrôlé en tension (13), un dispositif d'ajustement de phase (14), et les moyens (24) d'inhibition agissant pour déconnecter la pompe de charge (11) du filtre (12).

4. Dispositif selon la revendication 3, caractérisé en ce qu'il comprend des moyens (26) de contrôle de l'inhibition pour arrêter cette inhibition en présence d'impulsions de serration dans le signal reçu par le dispositif.

5. Utilisation d'un dispositif selon l'une des revendications 1 à 4 dans un moniteur.

6. Moniteur comprenant un écran, des dispositifs de déflexion horizontale et un dispositif de traitement d'un signal comprenant des impulsions de synchronisation horizontale tel que défini selon l'une des revendications 1 à 4.

## Claims

1. A circuit for treating a signal containing line sync pulses (101) used for displaying data on a screen, the circuit containing a phase locked loop (PLL-H) to control horizontal sweeping according to active edges of sync pulses, the circuit comprising means (22) for producing a windowing signal (WS) for filtering, in the active state, the signal received by the phase locked loop in order to eliminate from this signal the active edges which are out of phase with active edges of line sync pulses, the windowing signal (WS) being obtained by combining signal (EWI) representative of the line sync pulses and signal (TRAMFIN) representative of the frame sync pulses, so as the windowing signal is activated at a time before the beginning of frame sync pulses and is deactivated after the end of frame sync pulses.

2. A circuit according to claim 1, characterized in that it includes control means (28) to activate the windowing signal if the signal received by the circuit is a composite signal containing serration pulses (103), and for deactivating the windowing signal otherwise.

3. A circuit according to claim 1 or 2, characterized in that it includes means (24) for inhibiting the phase locked loop during frame sync pulses, if the received signal is a composite signal: the PLL comprising a comparator (10), a charge pump (11), a capacitive filter (12), a VLO (13), a phase adjustment circuit (14), and inhibition means (24) for deconnecting the charge pump (11) from the filter (12).

4. A circuit according to claim 3, characterized in that it includes inhibition control means (26) to prevent the inhibition when serration pulses are contained in the signal received by the circuit.

5. Use of a circuit according to any of claims 1 to 4 in a monitor.

6. A monitor comprising a screen, horizontal deflection circuitry and a circuit for treating a signal containing line sync pulses according to any of claims 1 to 4.

## Patentansprüche

1. Eine Schaltung zur Verarbeitung eines Zeilensyncimpulse (101) enthaltenden Signals verwendet zum Anzeigen von Daten auf einem Schirm, wobei die Schaltung folgendes aufweist:
eine Nachlauf synchronisation (phase-locked loop) (PLL-H) zur Steuerung der horizontalen Abtastung bzw. des horizontalen Überstreichens gemäß aktiver Flanken der Syncimpulse, wobei die Schaltung Mittel (22) aufweist zur Erzeugung eines fensterbildenden (windowing) Signals (WS) zur Filterung im aktiven Zustand des durch die Nachlaufsynchronisation empfangenen Signals, um aus diesem Signal die aktiven Flanken, die außer Phase sind, mit den aktiven Flanken der Zeilensyncimpulse zu eliminieren, wobei das fensterbildende Signal (WS) erhalten wird durch Kombination eines Signals (EWI) repräsentativ für die Zeilensyncimpulse und eines Signals (TRAMFIN) repräsentativ für die Rahmensyncimpulse, so daß das fensterbildende Signal zu einer Zeit vor dem Beginn der Rahmensyncimpulse aktiviert und nach dem Ende der Rahmensyncimpulse deaktiviert wird.

2. Schaltung nach Anspruch 1, dadurch gekennzeichnet, daß sie Steuermittel (28) aufweist zur Aktivierung des fensterbildenden Signals, wenn das durch die Schaltung empfangene Signal ein zusammengesetztes (composite) Signal ist, welches Sägezahnimpulse (103) enthält, zur Deaktivierung des fensterbildenden Signals ansonsten.

3. Schaltung nach Anspruch 1 oder 2, dadurch gekennzeichnet, daß sie Mittel (24) aufweist zum Sperren der Nachlaufsynchronisation während Rahmensyncimpulsen, wenn das empfangene Signal ein zusammengesetztes Signal ist, wobei die PLL folgendes aufweist:
einen Komparator (10), eine Ladungspumpe (11), einen kapazitiven Filter (12), ein VLO (13), eine Phaseneinrichtung und Sperrmittel (24) zur Abschaltung der Ladungspumpe (11) vom Filter (12).

4. Schaltung nach Anspruch 3, dadurch gekennzeichnet, daß sie Sperrsteuermittel (26) aufweist zur Verhinderung des Sperrens, wenn die Sägezahnimpulse in dem durch die Schaltung empfangenen Signal enthalten sind.

5. Verwendung einer Schaltung nach einem der Ansprüche 1 bis 4 in einem Monitor.

6. Ein Monitor, der einen Schirm aufweist, eine horizontale Auslenkschaltung und eine Schaltung zur Verarbeitung eines Signals, welches Zeilensyncimpulse enthält, und zwar gemäß irgendeinem der Ansprüche 1 bis 4.
